# FASCICULE DE BREVET EUROPEEN

(11) **EP 4 619 266 B1**
(45) Date de publication et mention de la délivrance du brevet: **28.10.2026**
(21) Numéro de dépôt: 23822418.2
(22) Date de dépôt: 13.11.2023
(51) Int. Cl.: B60K 35/10, B60K 35/50, B60K 35/65, B60K 35/53, B60Q 1/14

(54) **LEVIER DE COMMUTATION POUR UN VEHICULE AUTOMOBILE COMPRENANT UN ORGANE DE MANOEUVRE**
SCHALTHEBEL FÜR EIN KRAFTFAHRZEUG MIT EINEM BETÄTIGUNGSELEMENT
SWITCHING LEVER FOR A MOTOR VEHICLE COMPRISING AN ACTUATING MEMBER

(30) Priorité: 14.11.2022 FR 2211805
(43) Date de publication de la demande: 24.09.2025
(73) Titulaire: Renault s.a.s, 92100 Boulogne Billancourt (FR); KOSTAL Automobil Elektrik GmbH & Co. KG, 58513 Lüdenscheid (DE)
(72) Inventeur: DELTEIL, Pierre-Alexis, 78280 Guyancourt (FR); REBOUAH, Lucie, 78280 Guyancourt (FR); REYSS, Bertrand, 78280 Guyancourt (FR); FICEK, Wojciek, DE 58513 Lüdenscheid (DE)
(74) Mandataire: Fédit-Loriot
(86) Numéro de dépôt international: PCT/FR2023/051781
(87) Numéro de publication internationale: WO 2024/105330

(56) Documents cités:
- EP-B1- 0 666 807
- US-A1- 2017 275 851
- US-A1- 2020 201 378

## Description

La présente invention se rapporte à un levier de commutation d'un véhicule automobile, en particulier d'un levier placé dans la zone du volant du véhicule.

Il est connu d'avoir des commandes au volant d'un véhicule automobile comme par exemple un levier de commutation pour actionner à la main les clignotants ou des moyens d'éclairage. Le conducteur peut manœuvrer ce levier à la main, en particulier d'un simple geste du bout d'un doigt ou de plusieurs doigts.

Dans le cas des véhicules à boite de vitesses automatique, il est aussi connu d'avoir un levier de commutation au niveau du volant pour les opérations de commutation entre les différentes positions usuelles marche avant, neutre et marche arrière.

La demande de brevet EP3689659-A1 décrit un levier de commutation, au volant d'une boite de vitesses automatique comprenant un bras solidarisé à l'axe du volant d'un véhicule et en l'extrémité libre duquel se trouve un organe de manœuvre. Cet organe de manœuvre est constitué d'une poignée qui permet de basculer d'une position à une autre en tirant le levier depuis la poignée sur la position « point mort » et en déplaçant la poignée ainsi soulevée vers l'avant ou l'arrière pour passer en position respectivement marche avant ou marche arrière. Cette poignée comporte une face supérieure informative des manœuvres de positions qui recouvre une base en volume fixée par vissage et configurée selon une forme facilitant l'opération de commutation. Ceci permet d'obtenir un véhicule équipé d'un levier de commutation marche avant-arrière dont la poignée permet d'effectuer de manière fiable une opération de commutation entre les positions marche avant, neutre et marche arrière.

Le document US2020/0201378-A1 décrit un levier de commutation rattaché à une zone du volant d'un véhicule automobile, comportant une extrémité munie d'un moyen de manœuvre, plus particulièrement de manœuvre en rotation, comportant un axe et un capuchon monté retenu autour dudit axe.

L'invention vise à proposer une solution alternative permettant d'avoir un levier de commutation, en particulier de commutation des vitesses, situé au niveau du volant d'un véhicule, offrant une opération de commutation fiable tout en offrant la possibilité de personnaliser l'organe de manœuvre du levier, d'une manière esthétique et/ou ergonomique.

A cet effet, l'invention propose un levier de commutation comprenant un bras comportant une extrémité apte à être rattachée à la zone du volant d'un véhicule automobile, et un organe de manœuvre en une extrémité libre dudit bras, caractérisé en ce que ledit organe de manœuvre comprend :
- un boitier,
- une enveloppe amovible, montée autour du boitier,
- un moyen de rappel élastique et un moyen de retenue réversible retenant ladite enveloppe autour du boitier, ledit moyen de retenue comprenant au moins une partie mobile entre une position active de retenue et une position rétractée par coopération avec ledit moyen de rappel élastique,
- des moyens poussoirs de ladite enveloppe configurés pour repousser ladite enveloppe lorsqu'elle est libérée dudit moyen de retenue.

L'enveloppe de l'organe de manœuvre est ainsi retenue par un clippage au boitier, et se déclippe facilement pour être changée.

Les moyens poussoirs permettent de retirer plus facilement ladite enveloppe.

Cet agencement de l'organe de manœuvre selon l'invention permet que l'enveloppe soit installée selon un montage serré autour du boitier, autrement dit avec un jeu très faible entre le boitier et l'enveloppe, afin que l'enveloppe soit toujours bien maintenue autour du boitier lors des manipulations du levier, tout en pouvant être facilement retirée pour être changée.

De manière préférée, ledit boitier a une direction principale orientée transversalement ou obliquement à la direction principale du bras du levier.

En particulier lesdits moyens poussoirs sont configurés pour repousser ladite enveloppe selon la direction principale du boitier.

De manière préférée, ledit boitier loge au moins en partie le moyen de rappel élastique, le moyen de retenue, et les moyens poussoirs.

De manière préférée, lesdits moyens poussoirs comprennent un organe élastique et un élément poussoir mobile en translation au moins dans ladite enveloppe, par coopération avec ledit organe élastique.

De manière préférée, l'organe élastique est préchargé entre 7 et 15 newtons, de préférence entre 10 et 14 newtons.

De préférence, l'élément poussoir comporte une ouverture coopérant avec une butée que comprend le boitier afin de limiter la course de la translation de l'élément poussoir.

Avantageusement, la partie mobile entre une position active de retenue et une position rétractée dudit moyen de retenue est une partie en saillie, et ladite enveloppe comprend un orifice récepteur de la partie en saillie.

De manière préférée, ledit boitier comprend au moins deux parois comportant des rainures de guidage en translation de ladite enveloppe, selon la direction principale du boitier.

De préférence, ladite enveloppe comporte des rainures de guidage intérieures qui coopèrent avec celles du boitier.

De manière préférée, ladite enveloppe comporte une butée intérieure contre laquelle ledit élément poussoir vient en contact lorsque la partie mobile dudit moyen de retenue est mis en position rétractée.

En particulier, ladite enveloppe est constituée d'une pièce monobloc comportant un évidement intérieur. En particulier ladite enveloppe a une zone de forme intérieure comportant une partie évidée de taille réduite par rapport à l'élément poussoir formant une butée de l'élément poussoir.

De préférence, ledit levier de commutation est un levier de commutation d'une boite de vitesses. Ledit levier est configuré pour permettre la commutation entre les différentes positions des vitesses d'une boite de vitesses, en particulier entre les positions marche avant - point mort - marche arrière d'une boite automatique de vitesses. La boite de vitesses est notamment une boite de vitesses d'un véhicule automobile, le levier de commutation étant destiné à un véhicule automobile comme indiqué plus haut.

Le levier de commutation comprend un bras comportant une extrémité configurée pour être rattachée à la zone du volant du véhicule automobile, cette zone pouvant être une platine entourant l'axe du volant du véhicule automobile.

L'invention a également pour objet un véhicule automobile comprenant un levier de commutation comprenant un bras comportant une extrémité rattachée à la zone du volant dudit véhicule, ledit levier étant tel que décrit précédemment. En particulier, cette zone du volant peut être une platine entourant l'axe du volant du véhicule automobile.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :

[Fig. 1] est une vue en perspective montrant un levier de commutation avec un organe de manœuvre selon un mode de réalisation de l'invention, monté sur une pièce réceptrice au niveau du volant d'un véhicule automobile.

[Fig. 2] est une vue en éclaté et en perspective d'un levier de commutation comprenant un organe de manœuvre selon un mode de réalisation de l'invention.

[Fig. 3A] est une vue en perspective partielle de l'organe de manœuvre monté en une extrémité du bras du levier représenté en figures 1 ou 2, quand l'enveloppe est retenue sur le boitier.

[Fig. 3B] est une vue en perspective partielle de l'organe de manœuvre monté en une extrémité du bras du levier représenté en figures1 ou 2, quand l'enveloppe est enlevée.

[Fig. 4] est une vue schématique partielle (sans l'élément de fermeture), suivant une coupe longitudinale, de l'organe de manœuvre représenté aux figures 2 et 3A.

[Fig. 5] est une vue en perspective partiellement en écorché d'un levier de commutation comprenant un organe de manœuvre selon une variante du mode de réalisation de l'invention.

Dans la présente description, sauf précision autre, les termes avant, arrière, supérieur, inférieur, font référence aux directions usuelles du véhicule reposant sur ses roues. Les axes du trièdre orthonormé X, Y, Z, correspondent respectivement à l'axe longitudinal (orienté de l'avant vers l'arrière), transversal (orienté vers la droite du véhicule) et vertical pour un véhicule reposant sur ses roues (position usuelle).

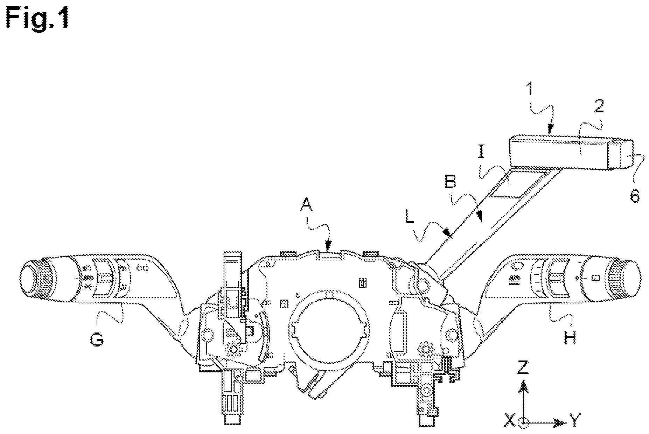

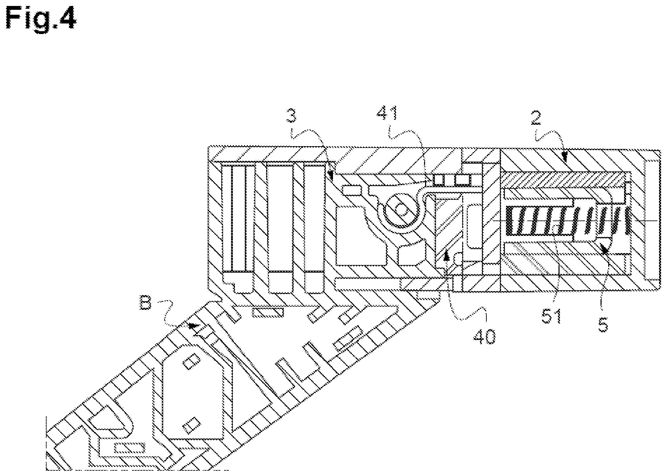

Les figures 1 à 4 sont commentées ensemble.

La figure 1 illustre, suivant une vue en perspective, un levier de commutation L avec un organe de manœuvre 1 selon un mode de réalisation de l'invention, monté sur une platine A entourant l'axe du volant d'un véhicule automobile. Ladite platine supporte aussi selon l'exemple un levier de commutation des clignotants et éclairages G et un levier de commutation des essuie- glaces H.

Le levier comprend un bras B en une extrémité de laquelle est agencé un organe de manœuvre 1 du levier permettant d'actionner le levier entre différentes positions assurant la commutation des vitesses d'une boite de vitesses automatique selon l'exemple. L'autre extrémité dudit bras est rattachée à la platine A. Une plaque informative I porte des informations (non représentées sur cette figure) indiquant les correspondances entre les positions du levier et les vitesses.

L'organe de manœuvre 1 comporte une enveloppe externe 2, de forme allongée, fermée en une de ses extrémités par un élément de fermeture 6.

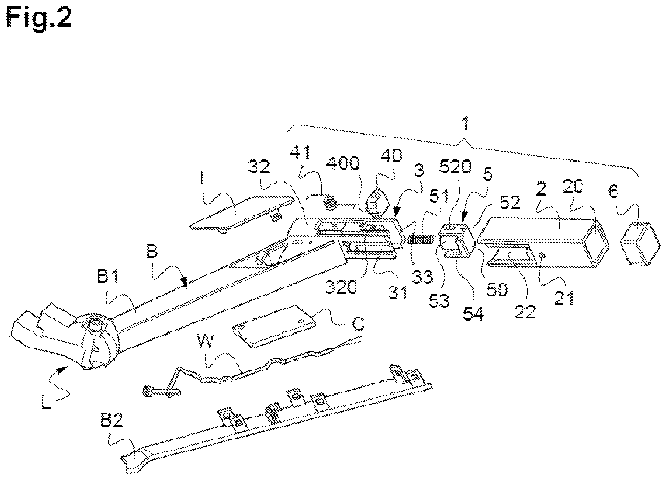

La figure 2 représente, selon une vue en éclaté, un levier de commutation des vitesses comprenant un organe de manœuvre 1 selon un mode de réalisation de l'invention, tel que représenté en figure 1.

Le levier L comprend un bras B comportant un corps principal B1 qui comprend un évidement dans lequel se logent une carte électronique C et un faisceau de câbles électriques W utiles au fonctionnement de la commutation des vitesses. Une plaque B2 vient fermée cet évidement. Le mécanisme de la commutation est mis en œuvre selon des procédés connus, qui ne sont pas en soi objets de la présente invention.

Sur une face de ce bras B visible par le conducteur, est apposée la plaque informative I relative aux correspondances entre les positions du levier et les vitesses. Selon cet exemple, les informations indiquent les différentes positions usuelles pour marche avant, neutre et marche arrière :
- D : Marche avant standard ( notée conventionnellement D pour « Drive »),
- B : Marche avant avec freinage régénératif (notée conventionnellement B pour « Brake », fréquemment présente pour les véhicules comprenant au moins un moteur de propulsion électrique),
- N : Point mort, dite aussi Neutre ( notée conventionnellement N pour « Neutral »),
- R : Marche arrière ( notée conventionnellement R pour « Reverse »).

L'organe de manœuvre 1 comprend un boitier 3 en l'extrémité du bras de levier, qui supporte l'enveloppe externe 2, dite aussi enveloppe de couverture. Cette dernière 2 comprend une découpe 22 selon le contour de l'extrémité du bras B qui supporte le boitier 3, ce qui permet d'enfiler ladite enveloppe autour du boitier 3 et de contourner l'extrémité du bras supportant le boitier.

Ledit boitier a une forme globale de parallélépipède dont la plus grande dimension définie la direction principale du boitier. Cette direction principale du boitier correspond sensiblement à la direction transversale (Y) du véhicule.

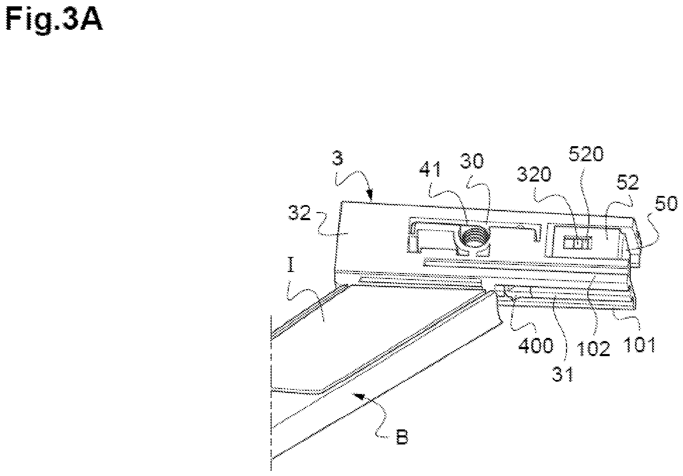

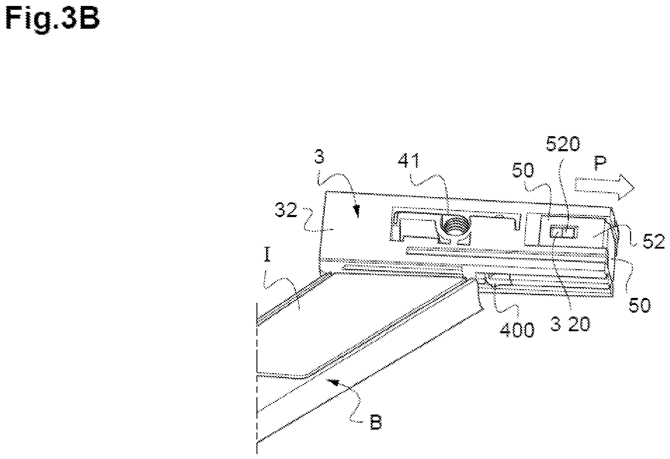

A l'intérieur du boitier, est monté transversalement au boitier, un moyen de retenue par clippage formée d'une seule pièce qui comprend un support 40 et un ergot 400 formant une partie en saillie de la face inférieure du support 40. Cet élément est mobile entre une position active de retenue et une position rétractée par coopération avec l'élément de rappel élastique 41 qui est un ressort de torsion logé dans un évidement 30 du boitier (voir Fig. 3A, Fig. 3B). Ledit ergot 400 vient se positionner dans un orifice 21 que comprend ladite enveloppe 2, lorsque l'enveloppe est montée à force sur le boitier.

Ledit boitier 3 comprend en outre des parois latérales opposées deux à deux, 32, 31, 33 (la face opposée à la face 32 n'est pas référencée sur les figures) orientées selon la direction principale du boitier, formant globalement un parallélépipède, et qui comportent des rainures de guidage en translation de l'enveloppe externe 2. Les rainures 102, 101 de guidage sont les seules visibles sur les figures. Par ailleurs deux parois latérales opposées (face latérale 32 et sa face opposée non référencée) comportent un plot formant une butée 320 (seul le plot 320 est visible sur les figures), en saillie sur leurs faces externes respectives qui coopèrent avec des moyens poussoirs 5, 51 comme expliqué ci-après.

L'enveloppe 2 est une pièce monobloc qui est creuse intérieurement. Elle comporte des rainures de guidage intérieures qui coopèrent avec celles du boitier. L'enveloppe 2 est installée selon un montage serré autour du boitier, autrement dit avec un jeu très faible entre le boitier et l'enveloppe, afin que l'enveloppe soit toujours bien maintenue autour du boitier lors des manipulations du levier.

Pour faciliter le démontage de l'enveloppe 2, des moyens poussoirs comprenant un ressort préchargé 51 et un élément poussoir 5 mobile en translation sous la force dudit ressort 5 sont montés dans le boitier 3. L'élément poussoir 5 est à l'intérieur de la partie de boitier à partir de laquelle on enfile l'enveloppe 2 autour du boitier 3. Ces moyens poussoirs sont aussi configurés pour entrer à l'intérieur de l'enveloppe 2 lorsque l'ergot 400 qui retient l'enveloppe 2 est mis en position rétractée, par exemple par une personne venant appuyer dessus avec la pointe d'un objet pointu.

L'enveloppe contient au moins une butée intérieure contre laquelle ledit élément poussoir vient en contact pour pousser ladite enveloppe. Cette butée peut être un élément en saillie de la surface intérieure de l'enveloppe. Alternativement, ladite enveloppe peut présenter une zone de forme intérieure dont la partie évidée est de taille réduite, de sorte que ledit élément poussoir 5 de taille plus importante vient en butée pour pousser ladite enveloppe.

L'élément poussoir 5 comporte une paroi 50 comportant deux faces opposées et orientées transversalement à la direction principale du boitier et de l'enveloppe, et dont une face est tournée vers l'enveloppe, et l'autre face, tournée vers le boitier, supporte un fût 53 récepteur du ressort préchargé 51. Ce fût 53 permet de maintenir et de guider en translation ledit ressort 51. En outre ledit élément poussoir 5 comprend deux parois latérales opposées 52, 54, orientées selon la direction principale du boitier et de l'enveloppe, ces parois comprenant chacune une ouverture 520, 540 de longueur déterminée. Ledit élément poussoir 5 est monté sur le boitier 3 de sorte que ces deux parois 52, 54 soient respectivement par-dessus et en contact des parois latérales correspondantes (face latérale 32 et sa face opposée non référencée) du boitier, ledit plot 320 qu'elles comportent respectivement étant inséré dans l'ouverture correspondante 520 (seule l'ouverture 520 est visible sur les figures), afin de limiter la course de la translation de l'élément poussoir 5, et de le retenir au boitier lorsqu'il exerce une poussée.

Lorsque l'ergot 400 est mis en position rétractée, l'enveloppe 2 n'étant plus retenue, le ressort préchargé 51, qui était comprimé, peut se détendre et exercé une poussée (flèche P), sur l'élément poussoir 5, selon une translation orientée suivant la direction principale du boitier et de l'enveloppe, ce qui a pour effet de pousser ledit élément poussoir (Fig. 3B) dans l'enveloppe, et par conséquent de pousser au moins partiellement l'enveloppe hors du boitier.

La charge du ressort 51 est calibrée de sorte que l'enveloppe 2 soit repoussée du boitier qui la supporte, sans toutefois que cette enveloppe 2 soit repoussée trop fortement. Par exemple, la charge du ressort est d'environ 10 à 12 Newtons. Ces moyens poussoirs permettent à toute personne de pouvoir retirer facilement l'enveloppe 2 qui est installée selon un montage avec un jeu très faible entre le boitier et l'enveloppe.

Un élément de fermeture 6, qui peut être d'une matière et/ou d'une couleur et/ou d'une opacité différente de celle(s) de l'enveloppe 2, ferme l'extrémité ouverte 20 de l'enveloppe, extrémité située à l'opposé de l'extrémité du côté du volant. Selon l'exemple ledit élément de fermeture 6 est fixé par collage à l'enveloppe. Il est collé sur l'intérieur du bord de l'extrémité ouverte 20 de l'enveloppe.

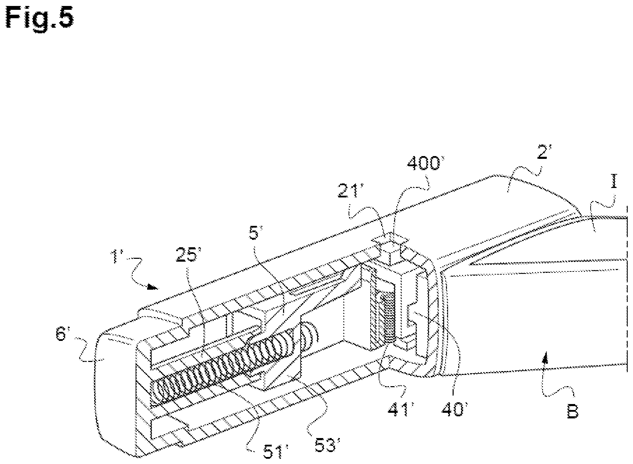

Selon une variante illustrée en Fig. 5, l'organe de manœuvre 1' comprend une enveloppe externe 2' qui a une forme similaire à l'enveloppe 2 décrite précédemment mais qui comporte un fût intérieur 25'. Elle se monte autour d'un boitier.

La partie en saillie de l'élément de retenue est un plot 400' monté dans un trou traversant d'un support 40' monté transversalement à la direction principale du boitier et de l'enveloppe 2'. Un moyen de rappel dudit plot, sous forme d'un ressort de compression 41', est maintenu entre une face dudit plot et une face opposée du support, de sorte que ledit plot est mobile en translation, transversalement à la direction principale du boitier et de l'enveloppe, entre une position en saillie et une position rétractée. Le plot 400' en saillie peut s'encliqueter dans l'orifice 21' de l'enveloppe 2' pour retenir l'enveloppe. Comme précédemment, il suffit d'appuyer avec la pointe d'un objet pointu sur ledit plot pour le rétracter dans le boitier, et ainsi déclipper l'enveloppe. En outre les moyens poussoirs comportent un élément poussoir 5' associé à un ressort de compression préchargé 51' monté dans un fût 53' que comprend ledit élément poussoir et s'étendant jusque dans un fût intérieur 25' de l'enveloppe 2', les deux futs 53', 25' étant aboutés quand l'enveloppe est clippée au boitier. Les moyens poussoirs comme précédemment permettent de retirer plus facilement l'enveloppe 2' lors du déclippage de l'enveloppe. Lesdits fûts supportent ledit ressort préchargé 51' et le guident en translation lors du clippage ou du déclippage de l'enveloppe.

Selon l'invention, en plus de sa fonction de couverture du boitier, et de faciliter, par sa forme allongée, la manipulation manuelle du levier par le conducteur du véhicule notamment, cette enveloppe externe 2, 2' a un effet esthétique. Elle peut être facilement personnalisée. Cette personnalisation peut être apportée par un effet esthétique de surface (coloris, textures), et/ou par sa forme ergonomique. Du fait qu'elle soit facile à installer autour du boitier et à retirer du boitier, elle peut être facilement changée par toute personne.

L'invention permet donc un démontage et montage faciles, aux fins de l'interchangeabilité et de la personnalisation, de l'enveloppe de l'organe de manœuvre du levier commutation, par un utilisateur du véhicule, à tout moment, y compris en après-vente.

## Revendications

1. Levier de commutation (L) comprenant un bras (B) comportant une extrémité apte à être rattachée à une zone d'un volant d'un véhicule automobile, et un organe de manœuvre (1, 1') en une extrémité libre dudit bras, ledit organe de manœuvre (1, 1') comprenant:
- un boitier (3),
- une enveloppe (2, 2') amovible, montée autour du boitier (3),
- un moyen de rappel élastique (41, 41') et un moyen de retenue réversible retenant ladite enveloppe autour du boitier, ledit moyen de retenue comprenant au moins une partie mobile (400, 400') entre une position active de retenue et une position rétractée par coopération avec ledit moyen de rappel élastique (41, 41'), **caractérisé en ce que** ledit organe de manœuvre comprend en outre :
- des moyens poussoirs (5, 51, 5', 51') de ladite enveloppe configurés pour repousser ladite enveloppe lorsqu'elle est libérée dudit moyen de retenue.

2. Levier de commutation selon la revendication 1, **caractérisé en ce que** lesdits moyens poussoirs comprennent un organe élastique (51, 51') et un élément poussoir (5, 5') mobile en translation au moins dans ladite enveloppe, par coopération avec ledit organe élastique.

3. Levier de commutation selon la revendication 2, **caractérisé en ce que** ledit organe élastique (51, 51') est préchargé entre 7 et 15 newtons, de préférence entre 10 et 14 newtons.

4. Levier de commutation selon l'une quelconque des revendications 2 à 3, **caractérisé en ce que** l'élément poussoir (5, 5') comporte au moins une ouverture (520) coopérant avec au moins une butée (320) que comprend le boitier, afin de limiter la course de la translation de l'élément poussoir.

5. Levier de commutation selon l'une quelconque des revendications 1 à 4, **caractérisé en ce que** la partie mobile (400, 400') entre une position active de retenue et une position rétractée dudit moyen de retenue est une partie en saillie, et ladite enveloppe comprend un orifice récepteur (21, 21') de la partie en saillie.

6. Levier de commutation selon l'une quelconque des revendications 1 à 5, **caractérisé en ce que** ledit boitier loge, au moins en partie, le moyen de rappel élastique, le moyen de retenue, et les moyens poussoirs.

7. Levier de commutation selon l'une quelconque des revendications 1 à 6, **caractérisé en ce que** ledit boitier comprend au moins deux parois comportant des rainures de guidage (101, 102) en translation de ladite enveloppe, selon la direction principale du boitier, et ladite enveloppe comporte des rainures de guidage intérieures qui coopèrent avec celles du boitier.

8. Levier de commutation selon l'une quelconque des revendications 2 à 7, **caractérisé en ce que** ladite enveloppe comporte une butée intérieure contre laquelle ledit élément poussoir (5, 5') vient en contact lorsque la partie mobile (400, 400') dudit moyen de retenue est mis en position rétractée.

9. Levier de commutation selon l'une quelconque des revendications 1 à 8, **caractérisé en ce qu'**il est configuré pour permettre la commutation entre les différentes positions des vitesses d'une boite de vitesses, en particulier entre les positions marche avant - point mort - marche arrière d'une boite automatique de vitesses.

10. Véhicule automobile comportant un levier de commutation (L) comprenant un bras (B) comportant une extrémité rattachée à la zone du volant dudit véhicule, ledit levier étant selon l'une quelconque des revendications 1 à 9.

11. Véhicule automobile selon la revendication 10, ladite zone du volant étant une platine entourant l'axe du volant du véhicule automobile.

## Patentansprüche

1. Umschalthebel (L), der einen Arm (B) mit einem Ende, das mit einem Lenkradbereich eines Kraftfahrzeugs verbunden werden kann, und ein Betägigungselement (1, 1') an einem freien Ende des Arms umfasst, wobei das Betätigungselement (1, 1') Folgendes umfasst:
- ein Gehäuse (3),
- eine abnehmbare Hülle (2, 2'), die um das Gehäuse (3) herum montiert ist,
- ein elastisches Rückstellmittel (41, 41') und ein umkehrbares Rückhaltemittel, das die Hülle um das Gehäuse herum hält, wobei das Rückhaltemittel mindestens einen beweglichen Teil (400, 400') zwischen einer aktiven Rückhalteposition und einer eingefahrenen Position durch Zusammenwirkung mit dem elastischen Rückstellmittel (41, 41') umfasst, **dadurch gekennzeichnet, dass** das Betätigungselement ferner Folgendes umfasst:
- Druckmittel (5, 51, 5', 51') der Hülle, die so konfiguriert sind, dass sie die Hülle zurückdrücken, wenn diese von dem Rückhaltemittel freigegeben wird.

2. Umschalthebel nach Anspruch 1, **dadurch gekennzeichnet, dass** die Druckmittel ein elastisches Element (51, 51') und ein Druckelement (5, 5') umfassen, das sich durch Zusammenwirkung mit dem elastischen Element mindestens in der Hülle verschieben lässt.

3. Umschalthebel nach Anspruch 2, **dadurch gekennzeichnet, dass** das elastische Element (51, 51') zwischen 7 und 15 Newton, vorzugsweise zwischen 10 und 14 Newton, vorgespannt ist.

4. Umschalthebel nach einem der Ansprüche 2 bis 3, **dadurch gekennzeichnet, dass** das Druckelement (5, 5') mindestens eine Öffnung (520) einschließt, die mit mindestens einem Anschlag (320) zusammenwirkt, der das Gehäuse umfasst, um den Verschiebeweg des Druckelements zu begrenzen.

5. Umschalthebel nach einem der Ansprüche 1 bis 4, **dadurch gekennzeichnet, dass** der bewegliche Teil (400, 400') zwischen einer aktiven Rückhalteposition und einer eingefahrenen Position des Rückhaltemittels ein vorstehender Teil ist, und die Hülle eine Aufnahmeöffnung (21, 21') für den vorstehenden Teil umfasst.

6. Umschalthebel nach einem der Ansprüche 1 bis 5, **dadurch gekennzeichnet, dass** das Gehäuse mindestens teilweise das elastische Rückstellmittel, das Rückhaltemittel und die Druckmittel aufnimmt.

7. Umschalthebel nach einem der Ansprüche 1 bis 6, **dadurch gekennzeichnet, dass** das Gehäuse mindestens zwei Wände umfasst, die Führungsnuten (101, 102) für die Verschiebung der Hülle in der Hauptrichtung des Gehäuses aufweisen, und dass die Hülle innere Führungsnuten aufweist, die mit denen des Gehäuses zusammenwirken.

8. Umschalthebel nach einem der Ansprüche 2 bis 7, **dadurch gekennzeichnet, dass** die Hülle einen inneren Anschlag einschließt, an den das Druckelement (5, 5') anstößt, wenn der bewegliche Teil (400, 400') des Rückhaltemittels in die eingefahrene Position gebracht wird.

9. Umschalthebel nach einem der Ansprüche 1 bis 8, **dadurch gekennzeichnet, dass** er so konfiguriert ist, dass er das Umschalten zwischen den verschiedenen Gangstellungen eines Getriebes, insbesondere zwischen den Stellungen Vorwärtsgang/Leerlauf/Rückwärtsgang eines Automatikgetriebes, ermöglicht.

10. Kraftfahrzeug, das einen Umschalthebel (L) aufweist, der einen Arm (B) mit einem Ende, das mit dem Lenkradbereich des Fahrzeugs verbunden ist, umfasst, wobei der Hebel nach einem der Ansprüche 1 bis 9 ist.

11. Kraftfahrzeug nach Anspruch 10, wobei der Lenkradbereich eine Platte ist, die die Lenkradachse des Kraftfahrzeugs umgibt.

## Claims

1. Gear lever (L) comprising an arm (B) having one end suitable for attachment to a steering wheel region of a motor vehicle, and an operating member (1, 1') at a free end of said arm, said operating member (1, 1') comprising:
- a housing (3),
- a removable casing (2, 2') mounted around the housing (3),
- an elastic return means (41, 41') and a reversible retaining means retaining said casing around the housing, said retaining means comprising at least one part (400, 400') that can be moved between an active retaining position and a retracted position in cooperation with the said elastic return means (41, 41'),
**characterized in that** said operating member further comprises:
- pusher means (5, 51, 5', 51') of said casing configured to push back said casing when it is released from said retaining means.

2. Gear lever according to claim 1, **characterized in that** said pusher means comprise an elastic member (51, 51') and a pusher element (5, 5') that is movable in translation at least in said casing, in cooperation with said elastic member.

3. Gear lever according to claim 2, **characterized in that** said elastic member (51, 51') is preloaded by between 7 and 15 newtons, preferably by between 10 and 14 newtons.

4. Gear lever according to any one of claims 2 to 3, **characterized in that** the pusher element (5, 5') includes at least one opening (520) cooperating with at least one stop (320) included in the housing, in order to limit the translational movement of the pusher element.

5. Gear lever according to any one of claims 1 to 4, **characterized in that** the part (400, 400') that can be moved between an active retaining position and a retracted position of said retaining means is a projecting part, and said casing comprises a receiving opening (21, 21') for the projecting part.

6. Gear lever according to any one of claims 1 to 5, **characterized in that** said housing accommodates, at least in part, the elastic return means, the retaining means, and the pusher means.

7. Gear lever according to any one of claims 1 to 6, **characterized in that** said housing comprises at least two walls including grooves (101, 102) for guiding in translation said casing, in the main direction of the housing, and said casing includes internal guiding grooves which cooperate with those of the housing.

8. Gear lever according to any one of claims 2 to 7, **characterized in that** said casing includes an internal stop with which said pusher element (5, 5') comes into contact when the mobile part (400, 400') of said retaining means is placed into the retracted position.

9. Gear lever according to any one of claims 1 to 8, **characterized in that** it is configured to allow shifting between the different gear positions of a gearbox, in particular between the drive - neutral - reverse positions of an automatic gearbox.

10. Motor vehicle including a Gear lever (L) comprising an arm (B) having one end attached to the steering wheel region of said vehicle, said lever being according to any one of claims 1 to 9.

11. Motor vehicle according to claim 10, said steering wheel region being a plate surrounding the shaft of the steering wheel of the motor vehicle.
